# FASCICULE DE BREVET EUROPEEN

(11) **EP 2 254 845 B1**
(45) Date de publication et mention de la délivrance du brevet: **09.10.2019**
(21) Numéro de dépôt: 09725830.5
(22) Date de dépôt: 25.03.2009
(51) Int. Cl.: C03B 3/02, C03B 5/04, C03B 5/235

(54) **FOUR DE FUSION DU VERRE**
GLASSCHMELZOFEN
GLASS MELTING FURNACE

(30) Priorité: 25.03.2008 EP 08102880
(43) Date de publication de la demande: 01.12.2010
(73) Titulaire: AGC Glass Europe, 1348 Louvain-la-Neuve (BE)
(72) Inventeur: DOUXCHAMPS, Olivier, B-6040 Jumet (BE); BEHEN, Johan, B-6040 Jumet (BE)
(74) Mandataire: Le Vaguerèse, Sylvain Jacques
(86) Numéro de dépôt international: PCT/EP2009/053500
(87) Numéro de publication internationale: WO 2009/118333

(56) Documents cités:
- EP-A- 0 650 934
- EP-A- 0 801 035
- EP-A- 0 872 690
- LIEVRE K ET AL: "RECENT DEVELOPMENTS IN OXY-FUEL FIRING FOR GLASS MELTERS" GLASS INDUSTRY, GLASS INDUSTRY MAGAZINE. NEW YORK, US, vol. 82, no. 3, 1 mars 2001 (2001-03-01), pages 25-31, XP001059392 ISSN: 0017-1026

## Description

La présente invention concerne les fours de fusion du verre dans lesquels l'énergie de fusion est produite essentiellement par des brûleurs alimentés en combustible et en oxygène ou en gaz très riche en oxygène. Ces fours sont qualifiés habituellement de four à "oxy-combustion".

L'utilisation de manière accessoire de brûleurs à oxy-combustion est bien connue dans les fours de fusion du verre. Sur des fours fonctionnant de manière traditionnelle avec de l'air, il s'agit alors d'ajouter un ou un nombre limité de brûleurs à oxy-combustion. L'introduction de ces brûleurs additionnels est généralement destinée à accroître la capacité de fours existants, éventuellement lorsque ceux-ci voient leur performance décliner du fait de leur ancienneté. Cette situation se trouve par exemple lorsque les régénérateurs associés à ces fours sont dégradés et ne permettent plus un réchauffage suffisant de l'air utilisé pour la combustion. Il peut s'agir aussi d'accroître simplement la capacité d'un four donné par l'introduction de sources supplémentaires d'énergie.

En règle générale les brûleurs additionnels oxy-combustion sont disposés près de la zone du four dans laquelle les matières premières sont enfournées. Ces brûleurs activent ainsi la fusion de ces matières premières. L'adjonction de quelques brûleurs oxy-combustion dans les fours de grande capacité, s'effectue habituellement sans modification profonde de la marche générale du four en ce sens, notamment, que les régénérateurs continuent de fonctionner et traitent donc à la fois les fumées issues de la combustion des brûleurs fonctionnant avec de l'air et celles provenant des brûleurs fonctionnant avec de l'oxygène.

Hors le fait de disposer d'une source d'énergie complémentaire ces systèmes fonctionnant dans le mode qualifié "d'oxy-boosting", ne permettent pas de bénéficier de tous les avantages connus qui peuvent résulter de l'oxy-combustion. Au nombre des avantages potentiels figurent principalement une consommation énergétique moindre et des émissions réduites de fumées indésirables.

L'oxy-combustion permet un gain énergétique au moins pour la raison que l'énergie des gaz de combustion n'est pas absorbée en partie par l'azote de l'air. Dans les fours traditionnels, même si une partie de l'énergie entraînée avec l'azote est récupérée dans les régénérateurs, les fumées finalement évacuées en entraînent encore une part significative. La présence de l'azote participe à cette perte.

La réduction de la consommation énergétique par unité de production considérée présente en plus l'avantage de limiter par voie de conséquence les émissions de dioxyde de carbone et donc de répondre aux exigences règlementaires dans ce domaine.

La présence d'azote est aussi source de formation d'oxydes dits NOx, dont l'émission est pratiquement interdite en raison des dommages liés à la présence de ces composés dans l'atmosphère. Dans la pratique les utilisateurs se sont efforcés de faire fonctionner les fours dans les conditions conduisant à des émissions aussi limitées que possible. Dans le cas des fours de verrerie, ces pratiques ne suffisent pas pour satisfaire aux normes très sévères en vigueur, et il est nécessaire de procéder à une dépollution coûteuse des fumées par l'usage de catalyseurs.

L'utilisation d'oxygène permet de s'affranchir des problèmes liés à l'azote de l'air, ce qui n'est pas le cas dans les techniques d'oxy-boosting.

En dépit des avantages énoncés ci-dessus, l'utilisation de l'oxy-combustion dans les grands fours verriers reste à développer. Les raisons sont de plusieurs natures. En premier l'utilisation d'oxygène est nécessairement plus coûteuse que celle d'air.

Le bilan économique de la mise en oeuvre de l'oxy-combustion n'est positif que dans la mesure où l'on est en mesure de récupérer une part significative de la chaleur des fumées. Jusqu'à présent la mise en oeuvre de la récupération de cette énergie ne semble pas avoir été entreprise de manière satisfaisante. Le gain énergétique potentiel n'a pas été effectivement obtenu.

Par ailleurs, la mise en oeuvre de l'oxy-combustion pose encore des problèmes d'ordre technique qui sont la contrepartie de certains avantages. Une difficulté reconnue est liée au fait de la corrosion des réfractaires, ce qui diminue la durée de vie des réfractaires en silice de la voûte. En effet la haute teneur en H₂O de l'atmosphère de combustion entraine deux phénomènes de détérioration :
- le premier est lié à la diffusion de H₂O dans la phase vitreuse des blocs réfractaires.
- le second est lié à la condensation de la soude présente dans l'atmosphère, sur la brique de réfractaire, ce qui implique un haut degré d'oxydation, six fois plus élevé dans le cas d'un four oxy-combustion.

Pour tenir compte de ces conditions, il est nécessaire d'utiliser des matériaux plus résistants à la corrosion que ceux habituellement choisis. Le plus couramment, pour diverses raisons, la voûte des grands fours de fusion verriers est constituée de briques de silice. Dans le cas de four à l'oxy-combustion il est nécessaire de plutôt faire appel à des matériaux tel que l'alumine, l'AZS, la spinelle, mais d'autre part ces matériaux sont plus coûteux, et posent aussi des problèmes en raison d'un poids significativement plus important.

D'autres problèmes nouveaux sont également apparus à l'expérience, qui nécessitent la mise en oeuvre de conditions spécifiques et nouvelles pour faire en sorte que cette technique trouve effectivement des applications que la théorie présente comme avantageuses. L'invention concerne des modalités de mise en oeuvre de la technique d'oxy-combustion dans les grands fours verriers qui font l'objet des revendications jointes à la présente description.

Les inventeurs se sont intéressés au problème de l'économie de cette technique d'oxy-combustion. En particulier ils proposent de faire en sorte que l'énergie des fumées des fours soit largement récupérée et utilisée pour le préchauffage de l'oxygène et, le cas «échéant, des combustibles consommés. Une partie de la chaleur des fumées peut aussi être utilisée pour préchauffer les matières premières enfournées. Dans la pratique l'invention est telle que formulée à la revendication 1, et précisée dans les revendications subsidiaires. En plus de l'utilisation d'oxygène chaud, l'invention se caractérise par la circulation des fumées de combustion et leur utilisation pour chauffer l'oxygène.

Le document antérieur EP 0 650 934 décrit un four fonctionnant en oxy-combustion, mais sans chauffage de l'oxygène, et sans utiliser la circulation des fumées pour prévenir la pénétration d'air.

Le bilan économique, notamment pour ce qui concerne l'énergie, nécessite que la chaleur des fumées soit récupérée. Le principe est connu. La difficulté vient de la mise en oeuvre des techniques de récupération pour le fonctionnement du four lui-même.

Le choix des inventeurs est de faire en sorte d'utiliser l'énergie des fumées, notamment pour préchauffer l'oxygène. Pour des raisons évidentes l'utilisation de régénérateurs pour cette récupération est exclue. Il faut opérer dans des échangeurs spécifiques. Cette opération est mal aisée dans la mesure où l'oxygène chaud est extrêmement agressif pour tous les matériaux au contact desquels il se trouve. Ce caractère corrosif est d'autant plus marqué que la température atteinte par l'oxygène est plus élevée.

Il faut aussi selon l'invention que les fours concernés soient sensiblement exempts d'une atmosphère chargée d'azote. Pour cette raison, contrairement à certaines solutions proposées antérieurement, il est préférable de faire en sorte que tous les brûleurs du four fonctionnent en oxy-combustion. Si néanmoins il est possible de conserver une partie de la combustion de type aéro-combustion, l'énergie engendrée par oxy-combustion représente au moins 80% de l'énergie totale mise en oeuvre dans le four, de façon particulièrement préférée au moins 90% de celle-ci.

L'utilisation d'une fraction d'aéro-combustion peut provenir d'un nombre limité de brûleurs fonctionnant entièrement en aéro-combustion, elle peut aussi venir de l'utilisation d'un oxygène comprenant une certaine teneur d'air. Dans ce dernier cas, compte tenu de ce que les brûleurs utilisés en oxy-combustion présentent des caractéristiques particulières, le mélange oxygène/air doit comprendre une teneur d'au moins 80% d'oxygène et de préférence au moins 90% d'oxygène.

Par mesure de simplification, dans la suite de la description il est fait référence à l'oxy-combustion, et à l'oxygène. Les développements à ce sujet, sauf indication contraire englobent la mise en oeuvre d'oxy-combustion avec un oxygène pouvant renfermer une faible proportion d'air, ou encore un ensemble comprenant une partie limitée d'aéro-combustion combinée avec une oxy-combustion majoritaire.

Indépendamment des constituants de l'atmosphère du four provenant de la combustion, il faut encore prévenir le plus possible la pénétration d'air provenant de l'extérieur d'une part pour éviter une perte d'énergie correspondant au réchauffage de cet air, mais surtout pour prévenir le plus possible la formation de NOx indésirables dû au passage de cet air à travers les hautes températures de la flamme de combustion (ces températures sont de l'ordre de 1800 à 2300°C suivant le type de brûleur oxygène choisi).

Quelles que soient les constructions envisagées les fours verriers ne peuvent être maintenus parfaitement étanches à l'atmosphère extérieure. Les efforts rapportés dans ce sens se sont portés principalement sur la mise en place de barrières physiques limitant la circulation des gaz de l'extérieur vers l'intérieur du four. Ces mesures sont certainement utiles, mais apparaissent insuffisantes si l'on veut maintenir une atmosphère essentiellement composée par les gaz de combustion.

Selon l'invention il est prévu en conséquence de prévenir l'admission d'atmosphère environnante en aménageant le four de telle sorte qu'il développe une étanchéité de caractère dynamique. Pour cela, selon l'invention, il est nécessaire de régler la circulation des fumées dans le four de la façon précisée plus loin.

Dans les grands fours verriers de fusion qui utilisent notamment des régénérateurs, la circulation des gaz dans le four s'effectue de manière transversale. Les brûleurs sont répartis de part et d'autre du bassin contenant le verre fondu. Ils fonctionnent en alternance. Pendant une période tous les brûleurs situés d'un côté du four sont en activité. Les fumées correspondantes sont évacuées par les conduits situés sur la paroi qui leur fait face. Les fumées sont passées sur les régénérateurs correspondant au côté en question. A la période suivante ce sont les brûleurs de l'autre côté qui sont mis en action avec l'air circulant sur les régénérateurs chauffés précédemment, et ainsi de suite.

Pour les fours à oxy-combustion les brûleurs situés de part et d'autre du four fonctionnent de manière continue. La distribution des brûleurs des deux côtés n'est pas commandée par la nécessité de cette alternance qui n'existe pas, mais plus par la recherche d'une optimisation de l'échange thermique entre les flammes et le bain de verre, ou avec les matières premières surnageantes.

Les flammes des oxy-brûleurs sont, à puissance égale, plus courtes que les flammes des aéro-brûleurs. La raison en est notamment un flux gazeux moins volumineux en raison de l'absence d'azote. Pour que la distribution énergétique soit aussi uniforme que possible, pour une largeur de four similaire, il est donc souhaitable de disposer les brûleurs des deux côtés pour couvrir au mieux la surface du bain.

Un accroissement de la vitesse d'émission des gaz en oxy-combustion qui pourrait conduire à allonger la flamme n'est pas souhaité notamment pour ne pas favoriser l'envol des poussières.

Il est aussi préférable de faire en sorte que les flammes se développent de manière aussi peu perturbée que possible. Pour éviter la collision des flammes disposées en vis-à-vis, elles sont donc avantageusement disposées en quinconce.

Suivant une autre spécificité des flammes d'oxy-combustion, pour parvenir à l'étagement de la combustion sur la longueur de la flamme, ce qui est préférable, comme dans les brûleurs en aéro-combustion, il est avantageux de faire en sorte que la flamme de ces brûleurs se développe en une nappe située dans un plan sensiblement parallèle à la surface du bain de verre. Ceci est obtenu par exemple au moyen de brûleurs présentant une pluralité de buses d'injection d'oxygène situées de part et d'autre de la buse d'admission du combustible, toutes ces buses étant sensiblement alignées parallèlement à la surface du bain.

La circulation des fumées à partir des flammes ne se fait pas comme en aéro-combustion de manière transversale. La circulation est organisée en fonction de deux objectifs.

D'une part il s'agit de faire en sorte que la transmission de chaleur des fumées au bain de verre soit aussi importante que possible. Autrement dit, on s'efforce de faire en sorte qu'à la sortie du four la température des fumées soit la moins élevée possible, en tenant compte du fait également que les flammes en oxy-combustion sont à température plus élevée, et que de façon globale les fumées sont aussi à température plus élevée qu'en aéro-combustion.

Pour parvenir à un échange thermique plus important on fait en sorte que le temps de résidence dans le four soit allongé.

Compte tenu du fait, pour une même énergie dissipée, que le volume des fumées est réduit de plus de la moitié par rapport à celui de l'aéro-combustion, pour un four dont le volume serait maintenu identique, toutes choses égales par ailleurs le temps de résidence des fumées serait nécessairement accru.

D'autre part, les dispositions relatives à la circulation des fumées permettent encore d'améliorer les transferts thermiques avec le bain. En particulier ceci résulte de la localisation des sorties de fumées, de l'emplacement des brûleurs et de la distribution de la puissance développée localement par chacun de ces brûleurs.

Selon l'invention, et pour procéder au meilleur transfert énergétique avec le bain ou avec les matières premières, il convient de faire circuler les fumées, ou au moins la majeure partie de celles-ci, en sens inverse de l'écoulement du bain. Ainsi les fumées au cours de leur progression dans le four voient décroître leur température jusqu'à leur sortie du four.

Pour cette raison l'évacuation des fumées, ou au moins la majeure partie de celles-ci, est localisée à proximité de l'enfournement des matières premières. Une possibilité est de faire en sorte que l'évacuation des fumées s'effectue par des conduits distincts de ceux par lesquels les matières premières sont introduites dans le four. Une autre possibilité est que cette évacuation s'effectue par les voies d'enfournement elles-mêmes, et donc à contre courant des matières premières. Pour cette dernière possibilité il faut notamment éviter les risques d'agglomération liés à la condensation au contact de ces matières premières "froides", de la vapeur d'eau contenue dans les fumées.

Pour avoir le meilleur transfert thermique, la plus grande partie des fumées est évacuée à proximité de l'enfournement des matières premières. En pratique il s'agit d'au moins 65% des fumées, et de préférence au moins 75%.

L'excédent des fumées qui n'est pas évacué comme indiqué ci-dessus suit un cheminement destiné notamment à maintenir l'étanchéité dynamique vis-à-vis de l'atmosphère extérieure. Une partie au moins de cet excédent est avantageusement évacuée vers l'aval du four. Comme indiqué cette fraction des fumées est aussi réduite que possible. Elle est avantageusement de moins de 35% de l'ensemble des fumées, et de préférence inférieure à 25%.

L'évacuation des fumées en aval du four est située au delà des derniers brûleurs. Il faut éviter que les gaz de combustion soient évacués avant un transfert thermique aussi complet que possible. Pour cela, ces gaz doivent séjourner un peu dans le four, d'où la nécessité de ne pas mettre les brûleurs trop près des conduits d'évacuation.

La présence de sorties en aval de la zone des brûleurs permet d'éviter notamment que de l'air provenant de cette zone traverse la zone des brûleurs. En effet la majorité de l'air en aval provient de la zone de conditionnement. La teneur en NOx est détectée de façon systématique en sortie amont. Si cette teneur s'avère trop élevée, il est possible de corriger cette teneur selon l'invention par la régulation des flux des sorties. Un accroissement de cette évacuation aval entraîne plus d'air provenant de l'aval du four et évite que cet air chargé d'azote ne passe à travers les flammes et forment des NOx.

Avantageusement ces réglages conduisent à une teneur en azote aussi faible que possible dans les fumées évacuées dans les sorties amont. La teneur est maintenue de préférence inférieure à 10% et de façon particulièrement préférée inférieure à 5%.

La température des gaz évacués en aval est généralement un peu plus élevée que celle des fumées évacuées en amont pour la raison que ces dernières sont au contact de zones du four les moins chaudes du fait en particulier que près de l'enfournement on ne dispose normalement pas de brûleurs, et que la couverture des matières premières surnageantes absorbe une part importante de l'énergie dans la fusion de ces matières premières.

Le temps de résidence des fumées dans le four procède d'un ensemble de conditions. Parmi celles-ci en dehors de l'organisation de la circulation des fumées indiquée ci-dessus, il faut encore ajouter le flux de fumées produites et le volume dont ces fumées disposent à l'intérieur du four. Pour un flux de fumées déterminé, le temps de résidence moyen est fonction du volume disponible. Plus le volume est important, plus le temps de résidence est élevé, et en principe, plus complet est le transfert thermique.

En pratique l'augmentation du volume du four influe de manière limitée et peut conduire à un bilan moins satisfaisant s'il n'est pas bien maîtrisé pour les raisons suivantes. L'expérience montre tout d'abord que le transfert thermique vers la masse à fondre et avec le bain, s'effectue principalement de manière radiative. La convection des fumées ne contribue que pour moins de 10% de l'apport, et se situe le plus souvent à moins de 8%. Dans ces conditions l'accroissement du temps de séjour des fumées, ajoute peu à cet apport convectif. Par ailleurs l'accroissement du volume du four conduit en plus de l'investissement supplémentaire en réfractaires, à une perte supplémentaire d'énergie dissipée à l'extérieur quelle que soit la qualité de l'isolation du four, cette perte étant fonction de la surface des parois exposée à l'atmosphère environnante.

Le séjour des fumées dans le four permet avantageusement de réduire un peu leur température de sortie. Elles sont d'ordinaire sur un four aéro-combustion à moins de 1650°C, de préférence à moins de 1600°C et de façon particulièrement préférée à moins de 1550°C. Dans le cas d'un four à oxy-combustion elles sont à moins de 1500°C, de préférence à moins de 1450°C et de façon particulièrement préférée à moins de 1350°C.

Par ailleurs, le volume du four détermine aussi la vitesse des fumées dans celui-ci. Il est préférable de faire en sorte que la vitesse de circulation des fumées dans le four reste modérée pour éviter de perturber les flammes. Il faut encore éviter l'envol de poussières en passant sur les matières premières, poussières qui devraient ensuite être éliminées avant passage dans les échangeurs thermiques.

A l'expérience le temps moyen de résidence des fumées dans un four aéro-combustion est de 1 à 3 secondes. Dans le cas de l'invention, d'un four à oxy-combustion, le temps moyen de résidence des fumées s'établi entre 10 et 40 secondes et le plus avantageusement entre 15 et 30 secondes.

La localisation des brûleurs, ou mieux la distribution de l'apport énergétique déjà évoqué, est un facteur important à la fois pour le bilan énergétique du four mais aussi pour la qualité du verre produit.

Tous les grands fours verriers comportent traditionnellement deux zones correspondant respectivement à la fusion et à l'affinage. Au-delà, le cheminement du verre se poursuit dans un bassin de conditionnement dans lequel la température du verre est progressivement abaissée pour atteindre sa température de mise en forme. Pour la fabrication du verre plat par la technique "float", cette température est de l'ordre de 1100°C.

Un goulet sépare habituellement la zone d'affinage et celle de conditionnement. Dans le jargon verrier ce goulet est nommé "neck"., Il permet en particulier de restreindre le passage de l'atmosphère d'une zone à l'autre. On s'efforce selon l'invention de réduire au mieux l'ouverture correspondante et par suite la circulation de l'atmosphère entrant dans la zone d'affinage en provenance de celle de conditionnement. Dans tous les cas les fumées ne doivent pas pénétrer dans la zone de conditionnement, faute de quoi des poussières encore en suspension pourraient se trouver entraîner et se déposer à la surface du verre.

L'introduction de gaz ne provenant pas de la combustion, et en particulier, le gaz pénétrant par le neck est aussi limitée que possible et avantageusement ne dépasse pas 15% du volume total, et de préférence est inférieur à 10% du volume total de gaz circulant dans le four.

La distinction entre zone de fusion et zone d'affinage tient compte de ce qu'il est traditionnel de nommer "boucles de convection" du verre. Ces boucles de convection sont engendrés par deux phénomènes : la convection naturelle et la convection forcée. D'une part les mouvements de convection naturelle sont liés aux conditions de température, liés à la répartition de puissance le long du four ("courbe de feu"), D'autre part les mouvements de convection forçée sont liés à la modification d'écoulement provoquée par exemple par des bouillonneurs, des mélangeurs ou des barrages. Ces deux phénomènes de convection conduisent le verre à progresser en développant dans la zone de fusion des mouvements de l'amont vers l'aval en surface et en sens inverse près de la sole. Dans la zone d'affinage le sens de circulation est inversé.

De manière générale la zone de fusion est celle qui nécessite l'apport d'énergie le plus important, et donc celle dans laquelle la puissance globale des brûleurs est la plus importante. La distribution est telle que cet apport n'est pas inférieur à 40% du total, de préférence pas inférieur à 50%. Il peut représenter jusqu'à 80% de l'apport, mais de préférence ne représente pas plus de 70% de l'énergie délivrée. Les pourcentages en question renvoient à la puissance délivrée par les brûleurs qui surplombent la zone en question.

Pour que la marche du four soit la plus efficace possible, les brûleurs doivent être convenablement distribués le long du four. Cette distribution n'est pas uniforme.

Il est nécessaire d'éviter la présence des brûleurs les plus puissants à proximité des sorties de fumées pour minimiser les pertes énergétiques dans les fumées. Cependant, dans le cas où les températures de verre sous le tapis de matière première en fusion sont trop faibles, au risque de figer le verre, des brûleurs d'appoint peuvent être localisés au voisinage des points d'enfournement des matières premières, soit sur les murs du four, soit sur la voûte, Une alternative pour minimiser les pertes énergétiques dans les fumées peut être l'utilisation de l'électro-boosting (le chauffage du verre par des électrodes traversant la sole). Le chauffage au moyen d'électrodes immergées présente l'avantage d'un réglage ajusté exactement aux besoins locaux. Par ailleurs le rendement de cet apport d'énergie électrique est beaucoup plus important qu'en chauffage par flamme, ce qui permet de le maintenir à des niveaux relativement bas. De façon générale lorsque cet appoint énergétique est mis en oeuvre il ne représente pas plus de 10% de l'ensemble de l'énergie développée dans le four, et le plus souvent est inférieur à 5%.

Les brûleurs sont situés à distance à la fois de l'enfournement des matières premières et des sorties amont des fumées. L'apport nécessaire d'énergie dans cette zone résulte donc d'une part des courants de convection au sein du bain, courants d'autant plus intenses que la température de la surface revêtue des matériaux à fondre, et celle plus en aval du bain fondu, présentent une différence importante. Cet apport provient aussi des fumées qui circulent à contre courant en se dirigeant vers les sorties aménagées en amont. Globalement la température dans cette zone n'est pas la plus élevée dans le four mais reste suffisante pour entretenir la fusion.

Si les premiers brûleurs sont situés à une certaine distance de l'évacuation des fumées, pour ne pas retarder la fusion des matières premières il est nécessaire néanmoins de localiser ces premiers brûleurs dans une zone du four dans laquelle le bain est encore couvert de matériaux non fondus. Cette zone de préférence ne dépasse pas la moitié de la longueur du four, et de façon particulièrement préférée pas le tiers. Il est en effet nécessaire, au-delà de la fusion de cette "couverture", d'assurer une parfaite fusion des particules de matériau dispersées dans le bain, et d'assurer la montée jusqu'à la température la plus élevée qui permet non seulement l'achèvement de la fusion mais aussi l'homogénéisation du bain fondu.

Outre la localisation des brûleurs, la distribution de la puissance délivrée est significative. La puissance des brûleurs est la plus forte dans la zone de fusion proche de la zone d'affinage. Dans cette partie la température atteinte est la plus élevée.

Dans la zone d'affinage, la température du bain doit être globalement maintenue. L'apport d'énergie nécessaire est donc plus limité. De préférence les brûleurs dans cette zone sont situés dans la partie la plus voisine de la zone de fusion. L'apport énergétique va de préférence, en décroissant dans le sens de la progression dans la zone d'affinage.

Il est nécessaire de pouvoir faire varier les paramètres de marche des fours, et en particulier la puissance totale appliquée. Ces variations commandées par la nature des matières premières, les variations de tirée...etc, sont le plus souvent d'ampleur limitée. Pour maintenir le plus possible les conditions de distribution de l'énergie établies de manière optimisée, traditionnellement les variations concernent essentiellement les brûleurs situés le plus en aval dans le sens de progression du verre. Cette particularité a pour conséquence des variations de volume des fumées dans cette zone. Pour éviter par voie de conséquence des modifications plus en amont du fait de la rupture de l'équilibre dynamique, il est avantageux suivant l'invention de procéder à la régulation du flux des fumées au moyen des sorties disposées dans la zone aval du four comme indiqué précédemment.

Dans les fours traditionnels fonctionnant en aéro-combustion, les brûleurs sont disposés sur les parois latérales des fours de telle sorte que les flammes se développent à proximité de la surface du bain. Cette disposition tient compte en partie du temps de résidence limité des fumées dans le four, lesquelles sont pour l'essentiel évacuées directement sur le côté du four qui fait face au brûleur. Il apparaît nécessaire de favoriser le plus possible les échanges, y compris de convection pendant ce bref temps de séjour et donc de faire en sorte que les flammes soient aussi au contact de la surface du bain.

Dans le cas d'un fonctionnement en oxy-combustion tel que selon l'invention, la part de l'apport par convection, comme indiqué précédemment est limitée. Il est donc préférable de disposer les brûleurs sur les parois latérales à distance de la surface du bain, garantissant à la fois une distribution adéquate de l'énergie rayonnée directement à partir de la flamme vers le bain et vers la voûte.

De préférence la localisation des brûleurs conduit au développement des flammes dans des plans sensiblement parallèles à la surface du bain, et au moins à 0,25m au dessus de cette surface, et de préférence à au moins 0,40m au dessus. Cette distance peut atteindre 1,0m mais de préférence est inférieure à 0,80m.

L'utilisation d'oxy-combustion, comme indiqué précédemment, modifie l'atmosphère du four laquelle est pratiquement dépourvue d'azote. En contrepartie elle est de façon relative plus riche en vapeur d'eau. Cette particularité influe de façon significative sur la conduite de la fusion. En particulier l'accroissement de la teneur en eau au dessus du bain s'accompagne d'un accroissement de cette teneur dans le verre.

La présence d'une forte teneur en eau favorise aussi le dégazage du verre et facilite l'affinage.

Une teneur en eau élevée a pour contrepartie éventuelle la formation de mousse à la surface du bain. La présence de mousse est indésirable notamment car elle fait obstacle à un bon échange thermique. Des moyens sont connus qui permettent de réduire la mousse si celle-ci se développe, indépendamment des mesures prises pour éviter son apparition. Ces moyens modifient la tension superficielle du verre par exemple en utilisant la technique décrite dans la publication EP 1 046 618..

Un autre moyen pour minimiser le risque de formation de mousse dans les zones où elle peut être particulièrement gênante, notamment dans la zone d'affinage, consiste à limiter la teneur en vapeur d'eau par le choix du combustible utilisé dans cette partie du four.

L'oxy-combustion peut être conduite avec différents types de combustible sans perdre le bénéfice des avantages énoncés ci-dessus. Les combustibles les plus usuels sont soit le gaz naturel soit les fuels liquides.

Pour ce qui concerne la teneur en vapeur d'eau, l'utilisation de gaz conduit à une teneur plus élevée qu'avec les fuels liquides. Pour cette raison, hors les questions relatives au coût de l'énergie évoquées ci-dessus, il peut être avantageux selon l'invention d'alimenter les brûleurs situés dans la zone d'affinage en fuel liquide. De cette façon on réduit le risque de formation de mousse dans la partie du four où elle pourrait être la plus préjudiciable.

Le bilan économique de l'oxy-combustion repose pour une part sur le coût de l'oxygène, celui des réfractaires adaptés, et d'autre part sur les économies de combustible et sur celles concernant l'absence partielle de dépollution des fumées. Pour avoir un bilan positif il est nécessaire de récupérer une part significative de la chaleur contenue dans les fumées sortant du four. En pratique comme pour les fours à aéro-combustion, l'utilisation la plus rentable consiste à réchauffer les réactifs introduits dans le four : oxygène, combustible et éventuellement matières premières.

Par comparaison avec les techniques d'aéro-combustion, notamment celles utilisant des régénérateurs, une difficulté vient de la nature des installations nécessaires. Les régénérateurs peuvent recevoir les fumées pratiquement telles que recueillies à la sortie du four. Les matériaux qui les composent, notamment les garnitures, de manière générale des matériaux céramiques réfractaires, supportent sans difficultés les températures des fumées et les poussières que ces fumées peuvent véhiculer. Ultérieurement le préchauffage de l'air dans les régénérateurs chauds ne nécessite pas de précautions particulières.

Le chauffage des produits utilisés pour l'oxy-combustion, et en particulier le chauffage de l'oxygène requiert au contraire des précautions beaucoup plus contraignantes. Les installations dans lesquelles l'oxygène circule doivent être parfaitement étanches, résistantes aux températures élevées et à l'oxygène porté à ces températures.

Pour ce qui concerne les fumées on s'efforce de faire en sorte qu'elles n'entraînent qu'un minimum de poussières. L'éloignement des flammes de la surface du bain, particulièrement dans les zones où le bain est couvert de matériaux non encore fondus, contribue à minimiser cet entraînement. Contribue aussi le fait que les brûleurs, lorsqu'ils sont disposés en quinconce, minimise les turbulences qui pourraient résulter de l'impact des flux gazeux émanant des brûleurs se faisant face.

La vitesse moyenne des fumées dans le sens longitudinal ne dépasse pas en règle générale 3m/s, et le plus souvent est inférieure à 2m/s. Dans les flammes cette vitesse est bien supérieure de l'ordre de 30 à 100m/s, cette vitesse étant normalement inférieure à celle des flammes en aéro-combustion.

Selon l'invention le préchauffage de l'oxygène est effectué avantageusement dans des échangeurs constitués dans des aciers montrant une excellente résistance à l'oxygène chaud. Des échangeurs et des matériaux convenant à cet usage sont décrits dans la demande de brevet européen n°07 107 942 déposée le 10 mai 2007, publiée le 26.11.2008 avec le nombre EP1995543 A1.

L'oxygène chaud fourni par l'échangeur est porté à une température qui au plus peut atteindre 650°C. Cette valeur est fonction de la résistance que l'on peut obtenir avec des alliages métalliques qui présentent les meilleures caractéristiques. Cette limite permet de garantir une durée d'utilisation en rapport avec le type d'installation considéré.

En pratique pour une meilleure sécurité il est préférable de maintenir la température de l'oxygène à moins de 600°C.

Pour que le préchauffage de l'oxygène soit suffisant pour améliorer le bilan énergétique de manière significative, la température n'est pas inférieure à 350°C.

De même le combustible utilisé est avantageusement préchauffé, qu'il s'agisse de gaz naturel ou de fuel liquide. Les températures atteintes pour le combustible ne sont pas tributaires de la résistance des installations. Elles dépendent éventuellement de la possible dégradation de ces combustibles. Il faut en particulier éviter de les "craquer", même partiellement, ce qui aurait pour conséquence l'encrassement des installations. Pour les gaz naturels la température de préchauffage est avantageusement inférieure à 650°C et de préférence inférieure à 550°C. Pour les fuels lourds, la température est généralement moins élevée et ne dépasse pas 180°C, et de préférence pas 150°C.

La récupération de la chaleur des fumées est largement suffisante pour permettre le chauffage de l'oxygène et du combustible aux températures indiquées, indépendamment du rendement de l'échange thermique lorsque celui-ci est réalisé dans les conditions évoquées dans la demande de brevet mentionnée ci-dessus. Il est encore possible avec l'excédent de préchauffer les matières premières, ou d'alimenter des chaudières quelle que soit l'usage de la vapeur produite.

L'invention est décrite avec certains détails dans la suite en faisant référence aux planches de dessins dans lesquelles :
- la figure 1 est une vue schématique en perspective d'un four selon l'invention ;
- la figure 2 illustre de façon schématique en vue de dessus les dispositions de la figure 1 ;
- la figure 3 est un schéma synoptique global des circuits d'échanges thermiques mis en oeuvre pour un four selon l'invention ;
- la figure 4 est un détail d'un schéma synoptique concernant la circulation selon un mode de préchauffage de l'oxygène ;
- la figure 5 représente en vue partielle de dessus les dispositions de brûleurs dans un four selon l'invention.

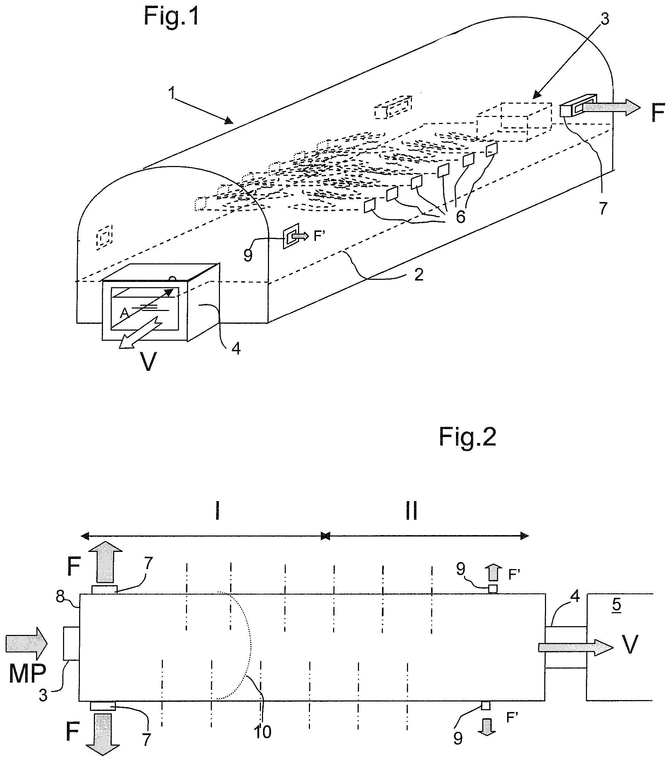

Le four présenté à la figure 1 est du type de ceux utilisés pour les productions de verre de grande capacité comme ceux servant à alimenter la production de verre plat par les techniques de verre "flotté". Des fours de ce type produisent en continu des quantités de verre qui peuvent aller jusqu'à 1000 tonnes/jour. Pour atteindre ces performances les fours doivent présenter une puissance qui atteint 60 MW.

Le four 1 comprend un bassin disposé dans une enceinte close. L'ensemble est constitué dans des matériaux réfractaires résistant aux températures, à la corrosion des fumées et à l'agression des matériaux fondus. Le niveau du bain dans le bassin est représenté par une ligne pointillée 2.

Le four est alimenté en matières premières à une de ses extrémités. L'ouverture par laquelle s'effectue l'enfournement de ces matières premières est schématisée en 3. En pratique pour faciliter la distribution sur la surface du bain plusieurs points d'enfournement sont habituellement aménagés. La sortie du verre fondu, représentée par la flèche V, s'opère à l'extrémité opposée par un goulet ("neck") 4 de largeur réduite par rapport à celle du bassin. Le plus habituellement le fond du neck 4 est au niveau de la sole du four.

Le neck n'est pas totalement immergé dans le verre fondu. Il demeure un espace entre la partie haute du neck et la surface de la nappe de verre. Les conditions de fonctionnement, pour ce qui concerne les flux gazeux dans le four, sont réglées de telle sorte que l'atmosphère du four ne passe pas dans le neck, pour éviter tout risque d'entraînement de poussières en suspension. Pour assurer ce fonctionnement il est préférable de conserver un faible courant gazeux, marqué par la flèche A, circulant à contre-courant du flux de verre fondu. Etant destiné seulement à prévenir un courant gazeux en sens inverse, ce courant A est maintenu aussi faible que possible. Il est important de le minimiser car il est constitué normalement par l'air présent au dessus de la zone de conditionnement, non-représentée à la figure 1 (référence 5 à la figure 2), qui fait suite au goulet.

Des brûleurs dont l'emplacement est indiqué en 6 sont disposés le long des parois latérales du four, de chaque côté de celui-ci pour étendre les flammes pratiquement sur toute la largeur du bassin. Les brûleurs sont espacés les uns des autres de manière à distribuer l'apport énergétique sur une grande partie de la longueur de ce même bassin de fusion-affinage.

Les gaz de combustion F sont évacués pour la part la plus importante par les sorties 7 localisées à proximité de la zone d'enfournement et à une certaine distance des brûleurs les plus proches. Dans la représentation (figure 1 et 2) deux sorties 7 sont disposées symétriquement sur les parois latérales tandis que l'enfournement des matières premières (MP) est dans l'axe du four. Il s'agit d'un mode préféré mais d'autres dispositions sont également possibles, comme par exemple la sortie des gaz dans la paroi 8 fermant le four dans sa partie amont. Ces sorties peuvent aussi être distribuées de manière différente, l'important étant de faire en sorte que les fumées remontent à contre-courant de l'écoulement du verre V dans le four. Le cas échéant, la sortie des fumées notamment peut s'effectuer, au moins partiellement, par la ou les ouvertures d'enfournement.

Comme indiqué précédemment, selon l'invention on fait en sorte que l'enceinte du four soit pratiquement étanche à la pénétration d'air extérieur. La circulation des fumées vers l'amont prévient la pénétration de ce côté du four. Les passages éventuellement disposés sur les parois latérales sont également essentiellement étanches à la pénétration de l'air ambiant. Pour refouler le peu d'air qui peut provenir de la partie conditionnement 5, une circulation très limitée des fumées est avantageusement aménagée vers l'aval du four. Ces fumées F' sont évacuées par les sorties 9.

Dans le réglage de la quantité d'air circulant de la zone de conditionnement vers celle d'affinage, outre les flux gazeux générés par les brûleurs, il est important aussi comme indiqué précédemment de pouvoir moduler les quantités de fumées extraites dans la zone aval du four et qui sont évacuées par les sorties 9.

Le four verrier de grande capacité comporte traditionnellement deux zones l'une dite de fusion, l'autre d'affinage. Aux figures 1 et 2, ces deux zones ne sont pas délimitées.

La limite entre fusion et affinage n'est généralement pas matérialisée dans la structure du four. En particulier si dans ces fours un barrage est disposé sur la sole, ce barrage ne coïncide pas ordinairement avec cette limite même si elle participe aux conditions qui conduisent à sa localisation.

La distinction entre zone de fusion et d'affinage est dans tous les cas fonctionnelle. Elle correspond au mode de circulation du verre dans le bassin. Celle-ci comprend une première boucle de convection dans la partie de fusion et une boucle, dont la rotation est en sens inverse de la première, dans la partie affinage. En l'absence de moyen influant directement sur la circulation, la position de la limite de la zone de fusion et de celle d'affinage est déterminée par un ensemble de paramètres de fonctionnement qui comprend notamment la distribution de l'énergie par les brûleurs. A la figure 2 ces deux zones sont représentées I et II.

En règle générale l'apport d'énergie nécessaire à la fusion des matières premières est plus important que celui qui maintient le verre à température pour l'affinage. En conséquence le nombre de brûleurs, et surtout la puissance qu'ils délivrent, est plus importante dans la zone de fusion.

Si il est utile d'apporter un maximum d'énergie pour la fusion, et donc dès l'enfournement des matières premières, il faut aussi éviter de placer les premiers brûleurs trop près des sorties de fumées 7, faute de quoi ces fumées très chaudes entraîneraient avec elles une part excessive d'énergie. Le choix de la position des premiers brûleurs est donc le résultat d'un compromis. Les premiers brûleurs sont positionnés de telle manière qu'ils se trouvent au-dessus des matières surnageantes.

Toujours pour limiter les pertes d'énergie par les fumées comme indiqué précédemment, il est aussi possible de moduler la puissance des brûleurs selon leur position. Les premiers brûleurs peuvent notamment fonctionner à puissance moins élevée que celle des brûleurs situés plus en aval.

Selon les modes de fonctionnement qui s'avèrent les plus avantageux, la "courbe de feu", c'est-à-dire la distribution des températures le long du four, progresse d'abord depuis l'amont jusque vers une partie centrale voisine du début de la zone d'affinage. La température varie un peu ensuite en décroissant légèrement jusqu'au neck 4 préparant le passage dans la zone de conditionnement. Pour cette raison l'extrémité aval du four est normalement dépourvue de brûleurs.

La distribution des brûleurs est représentée à la figure 2 par l'axe de ceux-ci. Ils sont de préférence disposés en quinconce de part et d'autre du bassin, pour faire en sorte que les flammes émises dans des directions opposées ne se heurtent pas. Latéralement ils sont écartés les uns des autre pour couvrir le mieux possible la surface du bain. Dans ce sens également, les brûleurs utilisés sont avantageusement du type qui développe la flamme sous forme d'une nappe sensiblement parallèle à la surface du bain. Leur puissance nominale individuelle dépend des brûleurs choisis et du nombre de brûleurs utilisés.

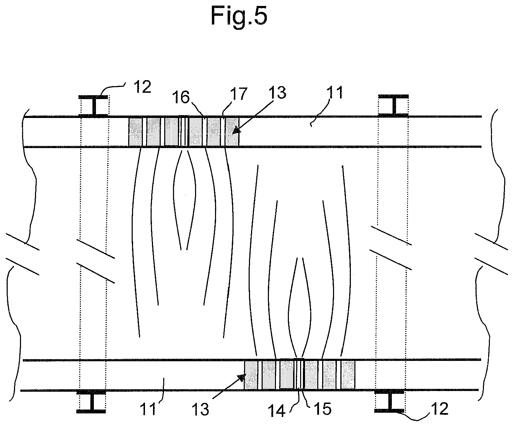

L'espace disponible sur les parois latérales du four 11 (figure 5) est limité par la présence de l'armature métallique 12 supportant la voûte du four. Les poutres constituant cette armature sont d'autant plus rapprochées que le four est plus large et que les matériaux céramiques réfractaires sont plus pesants. Pour les fours très larges, seulement deux brûleurs plats 13 du type de ceux décrits dans la publication WO 2004/094902 peuvent être installés entre deux poutres successives, un de chaque côté du four. Ces brûleurs organisent la combustion étagée à partir d'une alimentation centrale en combustible 14, concentrique à une première alimentation en oxygène 15, puis au moyen de plusieurs alimentations en oxygène secondaires 16, 17, parallèlement à la première, espacées de celle-ci et disposées dans un même plan sensiblement horizontal. Ces brûleurs à combustion étagée 13 produisent une flamme qui se développe dans un plan sensiblement parallèle à la surface du bain fondu. Par leur construction ces brûleurs présentent une certaine largeur, d'où le nombre limité entre deux poutres.

Comme représenté à la figure 1, les brûleurs débouchent dans l'enceinte du four à une certaine distance au-dessus de la surface du bain. Cette disposition, comme expliqué précédemment, permet de bien distribuer l'énergie rayonnée à partir de la flamme. Elle permet aussi, combinée avec la hauteur de la voûte, une bonne circulation des gaz de combustion notamment de ceux qui se dirigent vers les sorties principales 7 en remontant vers l'amont du four. Contrairement aux fours à aéro-combustion dont les fumées parcourent un trajet essentiellement transversal, dans le cas des fours à oxy-combustion selon l'invention ces fumées sont dirigées dans la longueur du four et donc transversalement à la direction des flammes qu'elles ne doivent pas perturber. Disposant à la fois d'espace sous les flammes et au dessus de celles-ci, le cheminement des fumées peut s'effectuer sans turbulences excessives préjudiciables au bon développement des flammes.

Les fumées à la sortie du four, sont utilisées dans des dispositifs destinés à récupérer une partie de l'énergie entraînée par ces fumées. Si en principe il est possible de procéder à un échange de chaleur directement entre les fumées et les produits à préchauffer, le souci de procéder dans les meilleures conditions d'efficacité et de sécurité conduit à des installations d'échange plus complexes.

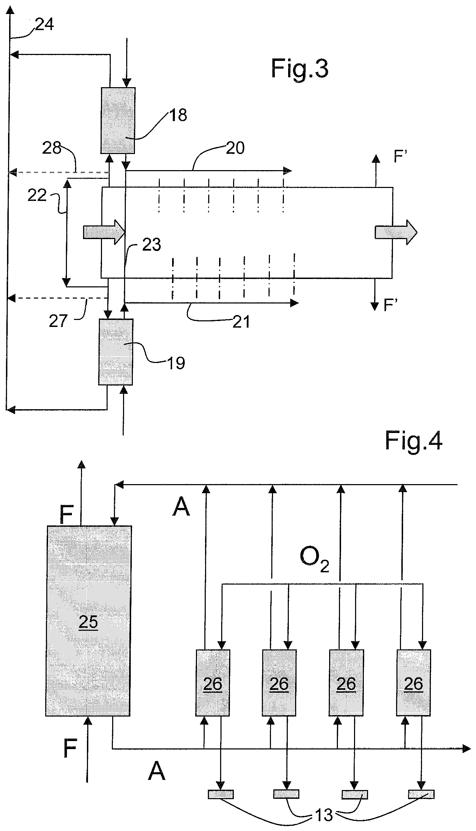

A la figure 3 cependant, par souci de simplicité, les installations d'échange sont représentées globalement en 18 et 19. Dans ces installations de l'oxygène, ou/et du combustible, est chauffé avant d'être acheminé vers les brûleurs par des canalisations 20, 21.

Les fumées à leur sortie sont initialement à des températures de l'ordre de 1200 à 1400°C. A ces températures il est préférable de les passer dans un "récupérateur", autrement dit un échangeur sommaire qui permet d'abaisser la température des fumées en vue de leur traitement avant rejet dans l'atmosphère par une cheminée 24. Le récupérateur est un système dans lequel un fluide circule à contre-courant des fumées. Dans sa forme la plus élémentaire il s'agit de deux canalisations concentriques. Un système plus élaboré est constitué d'un faisceau de tubes passant dans une enceinte ou circule le fluide caloporteur. Les deux types peuvent être combinés.

Après ce récupérateur les fumées sont encore à température élevée. Elle n'est pas généralement inférieure à 700°C sauf à utiliser des récupérateurs de très grandes dimensions. Avant d'être rejetées elles subissent une dépollution pour éliminer notamment les oxydes de soufre. Cette élimination est opérée par exemple dans des électro-filtres. Pour éviter la détérioration de ces filtres il faut encore abaisser la température jusqu'aux environ de 3-400°C. Un mode économique consiste à diluer les fumées avec de l'air ambiant.

Ramené à ces températures le mélange est encore utilisable comme moyen pour alimenter par exemple des chaudières produisant de la vapeur. La vapeur en question est notamment utilisable pour préchauffer les fuel-liquides. Ces derniers sont avantageusement préchauffés à des températures comprises entre 100 et 150°C, et de préférence entre 120 et 140°C.

Le fluide échangeur utilisé dans les récupérateurs est pour sa part utilisé comme indiqué ci-après en référence à la figure 4.

Dans la représentation de la figure 3, deux installations d'échange 18, 19, sont disposées une de chaque côté du four. Les deux canalisations des fumées sont reliées par une canalisation 22. Cette dernière, en cas de nécessité d'entretien ou de réparation d'une des installations permet de transférer une partie au moins des fumées sur la seconde momentanément, l'excédent peut aussi être évacué par les canalisations 27 ou 28. De la même manière une canalisation 23 permet en tant que de besoin d'alimenter les deux côtés du four en fluide caloporteur.

Des canalisations 27 et 28 permettent le cas échéant d'éviter le passage des fumées dans les récupérateurs et de les diriger directement vers l'évacuation 24.

A la figure 3 les fumées F' sortant en aval ne sont pas représentées comme conduites aux échangeurs. Selon la configuration de l'installation il est aussi possible de raccorder ces sorties de telle sorte que toutes les fumées soient l'objet d'une récupération. Dans la mesure où l'énergie "récupérable" est excédentaire par rapport à celle qui peut être utilisée cette récupération peut être omise le cas échéant.

Pour les raisons indiquées précédemment, il est avantageux de procéder aux échanges thermiques en deux temps. Dans un premier "récupérateur" les fumées réchauffent un fluide intermédiaire, par exemple de l'air, de l'azote, du CO₂ ou tout fluide approprié lequel circule par exemple en boucle entre ce récupérateur et un, ou mieux plusieurs échangeurs dans le(s)quel(s) il réchauffe l'oxygène ou le combustible. Une alternative pour le fluide intermédiaire comme de l'air, est de ne pas utiliser la boucle et de récupérer l'air chaud à la sortie des échangeurs secondaires par une chaudière ou un autre moyen de récupération d'énergie.

La figure 4 illustre ce principe. Le récupérateur 25 reçoit d'une part les fumées F, et à contre courant de celles-ci le fluide A, par exemple de l'air. L'air réchauffé est dirigé vers une série d'échangeurs 26 dans lesquels il circule à contre courant de l'oxygène qui est préchauffé avant d'être dirigé vers les brûleurs 13.

Dans la pratique compte tenu de la difficulté d'acheminer l'oxygène chaud par des canalisations longues, à cause du coût des canalisations ou des pertes thermiques, selon l'invention il est proposé avantageusement d'effectuer le préchauffage de l'oxygène à proximité des brûleurs dans lesquels cet oxygène est consommé. Pour cette raison il est nécessaire de multiplier les échangeurs qui selon les cas alimentent chacun un ou un petit nombre de brûleurs situés à proximité immédiate.

A la figure 4 chaque brûleur 13 est alimenté par un échangeur 26.

L'air, après préchauffage de l'oxygène, est retourné au récupérateur 25 ou est retourné dans le conduit des fumées du four pour être passé dans une chaudière.

## Revendications

1. Four de fusion du verre comprenant un bassin de fusion de forme canal, l'introduction des matières premières s'effectuant à une extrémité amont, le verre fondu étant récupéré à l'extrémité aval, four chauffé au moyen de brûleurs, dans lequel l'énergie de combustion est produite par oxy-combustion pour au moins 80%, l'énergie des fumées étant récupérée et servant au moins au préchauffage de l'oxygène alimentant les brûleurs, l'oxygène étant porté à une température qui n'est pas inférieure à 350°C et pas supérieure à 650°C, les brûleurs étant distribués sur les parois dans la longueur du four à distance des évacuations des fumées, dans lequel l'évacuation des fumées est localisée à proximité de l'extrémité amont au voisinage des ouvertures d'introduction des matières premières pour au moins 65% de ces fumées et de préférence au moins 75%, le restant des fumées étant évacuées à proximité de la partie aval, au-delà des derniers brûleurs, en maintenant par ces flux de fumées une étanchéité dynamique vis-à-vis de l'atmosphère environnante.

2. Four de fusion selon la revendication précédente dans lequel l'oxygène utilisé pour l'oxy-combustion présente une teneur en oxygène d'au moins 85%.

3. Four de fusion selon l'une des revendications précédentes dans lequel l'énergie de combustion est produite par oxy-combustion pour au moins 90%.

4. Four de fusion selon l'une des revendications précédentes comprenant une zone de fusion suivie d'une zone d'affinage, les matériaux étant entièrement fondus dans la zone de fusion, dans lequel les brûleurs sont distribués le long des parois du four tant dans la zone de fusion que celle d'affinage, la distribution étant faite en fonction de la puissance requise, pour la fusion dans la première zone et pour le maintien en température dans la seconde.

5. Four de fusion selon l'une des revendications précédentes dans lequel les fumées, ou la plus grande partie de celles-ci, sont récupérées et envoyées dans un récupérateur thermique, un fluide caloporteur étant chauffé dans ce récupérateur, ce fluide étant envoyé dans un ou plusieurs échangeurs secondaires pour chauffer l'oxygène.

6. Four selon la revendication 5 dans lequel le fluide caloporteur est également utilisé dans des échangeurs thermiques pour le réchauffage du combustible gazeux alimentant l'oxy-combustion.

7. Four selon la revendication 5, dans lequel les fumées sortant du récupérateur servent à alimenter une chaudière dont la vapeur est utilisée dans un échangeur thermique pour chauffer le combustible constitué de fuel lourd alimentant l'oxy-combustion

8. Four selon l'une des revendications précédentes dans lequel les fumées ou une partie d'entre elles sont envoyées dans un ou plusieurs échangeurs de chaleur pour chauffer les matières premières introduites ensuite dans le four.

9. Four selon la revendication 4 dans lequel le combustible est choisi de façon différenciée selon la zone du four dans laquelle se situent les brûleurs concernés, les brûleurs situés dans la zone de fusion étant alimentés en gaz, les brûleurs de la zone d'affinage étant alimentés en fuels lourds.

## Patentansprüche

1. Glasschmelzofen mit einer kanalförmigen Schmelzwanne, wobei das Einbringen der Rohstoffe an einem stromaufwärtigen Ende erfolgt, wobei die Glasschmelze am stromabwärtigen Ende zurückgewonnen wird, wobei der Ofen mit Brennern beheizt wird, wobei die Verbrennungsenergie zu mindestens 80 % durch Sauerstoffverbrennung erzeugt wird, wobei die Energie der Rauchgase zurückgewonnen wird und mindestens zum Vorwärmen des den Brenner zugeführten Sauerstoffs dient, wobei der Sauerstoff auf eine Temperatur von mindestens 350 °C und höchstens 650 °C gebracht wird, wobei die Brenner an den Wänden in der Länge des Ofens im Abstand der Rauchgasabzüge verteilt sind, wobei das Abziehen der Rauchgase für mindestens 65 % dieser Rauchgase und bevorzugt mindestens 75 % in der Nähe des stromaufwärtigen Endes in der Umgebung der Öffnungen zum Einbringen der Rohstoffe lokalisiert ist, wobei der Rest der Rauchgase in der Nähe des stromabwärtigen Teils, jenseits der letzten Brenner, abgezogen wird, wobei durch diese Rauchgasströme eine dynamische Abdichtung gegenüber der umgebenden Atmosphäre aufrechterhalten wird.

2. Schmelzofen nach dem vorhergehenden Anspruch, wobei der zur Sauerstoffverbrennung verwendete Sauerstoff einen Sauerstoffgehalt von mindestens 85 % aufweist.

3. Schmelzofen nach einem der vorhergehenden Ansprüche, wobei die Verbrennungsenergie zu mindestens 90 % durch Sauerstoffverbrennung erzeugt wird.

4. Schmelzofen nach einem der vorhergehenden Ansprüche, umfassend einen Schmelzbereich, auf den ein Läuterungsbereich folgt, wobei die Materialien vollständig im Schmelzbereich geschmolzen werden, wobei die Brenner entlang der Wände des Ofens sowohl im Schmelzbereich als auch im Läuterungsbereich verteilt sind, wobei die Verteilung in Abhängigkeit von der Leistung erfolgt, die im ersten Bereich zum Schmelzen und im zweiten zur Temperaturhaltung erforderlich ist.

5. Schmelzofen nach einem der vorhergehenden Ansprüche, wobei die Rauchgase oder der größte Teil davon zurückgewonnen werden und in einen Wärmerekuperator geleitet werden, wobei in diesem Rekuperator ein Wärmeträgermedium erwärmt wird, wobei dieses Medium in einen oder mehrere sekundäre Tauscher geleitet wird, um den Sauerstoff zu erwärmen.

6. Ofen nach Anspruch 5, wobei das Wärmeträgermedium in Wärmetauschern auch zum Anwärmen des der Sauerstoffverbrennung zugeführten gasförmigen Brennstoffs verwendet wird.

7. Ofen nach Anspruch 5, wobei die aus dem Rekuperator austretenden Rauchgase dazu dienen, einem Kessel zugeführt zu werden, dessen Dampf in einem Wärmetauscher verwendet wird, um den der Sauerstoffverbrennung zugeführten Brennstoff, der aus Schweröl besteht, zu erwärmen.

8. Ofen nach einem der vorhergehenden Ansprüche, wobei die Rauchgase oder ein Teil von ihnen in einen oder mehrere Wärmetauscher geleitet werden, um die Rohstoffe zu erwärmen, die anschließend in den Ofen eingebracht werden.

9. Ofen nach Anspruch 4, wobei der Brennstoff je nach Bereich des Ofens, in dem die betreffenden Brenner gelegen sind, auf differenzierte Weise gewählt wird, wobei den im Schmelzbereich gelegenen Brennern Gas zugeführt, wobei den im Läuterungsbereich gelegenen Brennern Schweröl zugeführt wird.

## Claims

1. Glass melting furnace comprising a channel-shaped melting basin, the starting materials being introduced at an upstream end, the molten glass being recovered at the downstream end, the furnace being heated by means of burners, in which the energy of combustion is provided by oxy-combustion for at least 80%, the energy of the fumes being recovered and serving at least for preheating the oxygen supplied to the burners, the oxygen being brought to a temperature of not less than 350°C and not greater than 650°C, the burners being distributed over the walls along the length of the furnace at a distance from the fume removal points, in which the removal of the fumes is located close to the upstream end, in the vicinity of the starting materials introduction openings for at least 65% of these fumes and preferably at least 75%, the remainder of the fumes being removed close to the downstream part, beyond the last burners, and maintaining by these flows of fumes a dynamic seal with respect to the surrounding atmosphere.

2. Melting furnace according to the preceding claim, in which the oxygen used for the oxy-combustion has an oxygen content of at least 85%.

3. Melting furnace according to one of the preceding claims, in which the energy of combustion is produced by oxy-combustion for at least 90%.

4. Melting furnace according to one of the preceding claims, comprising a melting zone followed by a refining zone, the materials being completely melted in the melting zone, in which the burners are distributed along the walls of the furnace both in the melting zone and in the refining zone, the distribution reflecting the required power, for melting in the first zone and for maintaining the temperature in the second.

5. Melting furnace according to one of the preceding claims, in which the fumes or the greatest part of the fumes are recovered and sent to a heat recovery unit, a heat transfer fluid being heated in this recovery unit, this fluid being sent to one or more secondary heat exchangers for heating the oxygen.

6. Furnace according to Claim 5, in which the heat transfer fluid is also used in heat exchangers for heating the gaseous fuel supplied to the oxy-combustion.

7. Furnace according to Claim 5, in which the fumes leaving the recovery unit serve to supply a boiler, the steam from which is used in a heat exchanger for heating the fuel consisting of heavy fuel oil supplied to the oxy-combustion.

8. Furnace according to one of the preceding claims, in which the fumes or part thereof are sent to one or more heat exchangers for heating the starting materials that are subsequently introduced into the furnace.

9. Furnace according to Claim 4, in which the fuel is chosen in a differentiated manner according to the zone of the furnace in which the relevant burners are located, the burners in the melting zone being supplied with gas and the burners in the refining zone being supplied with heavy fuel oils.
